# EUROPÄISCHE PATENTSCHRIFT

(11) **EP 0 472 697 B1**
(45) Veröffentlichungstag und Bekanntmachung des Hinweises auf die Patenterteilung: **28.06.1995**
(21) Anmeldenummer: 91906046.7
(22) Anmeldetag: 14.03.1991
(51) Int. Cl.: F16B 43/00

(54) **GROSSFLÄCHIGE UNTERLEGSCHEIBE**
LARGE AREA WASHER
RONDELLE A GRANDE SURFACE

(30) Priorität: 19.03.1990 DE 4008782
(43) Veröffentlichungstag der Anmeldung: 04.03.1992
(73) Patentinhaber: SFS Industrie Holding AG, 9435 Heerbrugg (CH)
(72) Erfinder: KLUSER, Remo, CH-9450 Altstätten (CH)
(74) Vertreter: Ludescher, Hans
(86) Internationale Anmeldenummer: EP9100488
(87) Internationale Veröffentlichungsnummer: WO9114873

(56) Entgegenhaltungen:
- EP-A- 0 307 647
- FR-A- 2 022 050
- US-A- 1 670 890
- US-A- 4 574 551
- US-A- 4 890 968

## Beschreibung

Die Erfindung betrifft eine grossflächige Unterlegscheibe mit einem Mittelbereich, mit einer Durchgangsöffnung zur Aufnahme eines Befestigers, mit einem äusseren Umfangsrand und mit abgesetzten Bereichen zum Erleichtern des Vereinzelns aus einem Stapel mit den im Oberbegriff des Anspruch 1 angegebenen Merkmalen (EP-A-0307 647).

Solche Unterlegscheiben werden in der Regel bei der Befestigung ein- oder mehrschichtiger Dachbahnen und/oder einer Isolierschicht auf einem festen Unterbau eingesetzt. Insbesondere dann, wenn diese Unterlegscheiben in einem Magazin einer Verschraubeinrichtung gehalten sind und dort für den Verschraubvorgang vereinzelt werden müssen, ist es notwendig, dass die Unterlegscheiben eine bestimmte Dicke aufweisen, um einen störungsfreien Arbeitsablauf zu gewährleisten. Es war daher oft notwendig, die Unterlegscheibe allein wegen der Vereinzelungsmöglichkeit aus einem entsprechend dicken Material zu fertigen, wobei für die Befestigung selbst auch ein dünneres Material eine ausreichende Festigkeit geboten hätte.

Bei einer bekannten, kreisrunden Unterlegscheibe (DE-B-1269840) sind koaxial zur mittiger Durchgangsöffnung verlaufende, mit Abstand sektorförmig aufeinander folgende Rippen vorgesehen. Die Stapelhöhe von aufeinander geschichteten Unterlegscheiben ergibt sich aus deren Gesamtdicke, die sich aus deren Wandstärke und den Rippen zusammensetzt.

Eine ähnlich gestaltete Unterlegscheibe ist in US-A-1670890 beschrieben.

Weiters ist eine in Umfangsrichtung wellenförmig verlaufende Unterlegscheibe (JP-A-1210607) bekannt geworden, welche ringförmig mit grosser Mittelöffnung ausgeführt ist. Für eine Stapelung könnten diese Unterlegscheiben wohl übereinander geschichtet werden, doch könnte eine Vereinzelung quer zur Mittelachse der Mittelöffnung nicht erfolgen, da die Wellenhöhe ein Mehrfaches der Wandungsstärke der Unterlegscheiben ausmacht.

Bei einer anderen grossflächigen Unterlegscheibe bekannter Art (US-A-4890968) sind im Mittelbereich zwischen dem äusseren Umfangsrand und der mittigen Durchgangsöffnung für einen Befestiger mit Abstand vom Umfangsrand umfangsgeschlossene Rippen und zusätzlich radial vor innen nach aussen verlaufende Rippen vorgesehen, wobei mehrere Unterlegscheiben in einem Stapel übereinander geschichtet werden können. Die Rippen an den Unterlegscheiben sorgen dafür, dass die Umfangsränder der aufeinander gestapelten Unterlegscheiben in einem entsprechend grossen Abstand voneinander liegen, damit beim Vereinzeln des Stapels durch einen Schieber sicher immer nur die unterste Scheibe eines Stapels erfasst werden kann. Durch diese Stapelung ergibt sich bereits bei einer geringen Anzahl von Unterlegscheiben eine enorme Stapelhöhe, da jede Unterlegscheibe im Stapel ein Mehrfaches der Materialstärke der Unterlegscheibe an Stapelhöhe bedingt.

Die vorliegende Erfindung hat sich zur Aufgabe gestellt, die eingangs genannte Unterlegscheibe derart auszubilden, dass sie auch bei Einsatz von dünnerem Werkstoff in entsprechenden Vereinzelungsvorrichtungen eingesetzt werden kann und dabei auch eine Verringerung der Stapelhöhe mit sich bringt.

Erfindungsgemäss wird dazu vorgeschlagen, dass der äussere Umfangsrand der Unterlegscheibe in dessen Längsrichtung gesehen in mehreren Abschnitten ein- oder mehrfach stufen- oder bogenförmig abgesetzt ausgebildet ist, und dass die Uebergänge zwischen den zueinander abgesetzten Abschnitten des Umfangsrandes bogenförmig oder scharfkantig ausgebildet sind.

Durch diese erfindungsgemässe Massnahme wird erreicht, dass gerade der bei einer Vereinzelung in einem Magazin wesentliche Umfangsrand der Unterlegscheibe eine verbreiterte Angriffsfläche für eine Vereinzelungsvorrichtung bietet, wobei insbesondere an den Uebergängen zwischen den zueinander abgesetzten Abschnitten des Umfangsrandes die bei Unterlegscheiben aus entsprechend dickerem Material vorhandene Angriffshöhe erzielt wird.

Die Uebergänge zwischen den zueinander abgesetzten Abschnitten des Umfangsrandes sind bogenförmig oder scharfkantig ausgebildet. Gerade diese Uebergänge spielen für die Vereinzelung der Unterlegscheibe besonders günstig mit, da in diesem Bereich über die ganze Gesamthöhe des Umfangsrandes der Unterlegscheibe eine Angriffsmöglichkeit für einen Vereinzelner geschaffen ist.

Daneben tragen diese ein- oder mehrfach stufen- oder bogenförmig abgesetzten Abschnitte des Umfangsrandes zu einer weiteren Verstärkung der Unterlegscheibe bei.

Es kann also für die Fertigung von grossflächigen Unterlegscheiben ein wesentlich dünneres Ausgangsmaterial gewählt werden, wobei trotzdem eine einwandfreie Magazinierung und Vereinzelung gewährleistet ist.

Es wird dadurch auch eine Gewichts- und eine Platzeinsparung erreicht, da in einem gleichhohen Stapel von Unterlegscheiben nunmehr die Stückanzahl wesentlich erhöht werden kann. In konstruktiver Hinsicht ist es dabei zweckmässig, wenn einzelne Abschnitte des Umfangsrandes in Längsrichtung desselben gesehen gegenüber einer Hauptebene des Umfangsrandes in einer mit Abstand parallel dazu verlaufenden Ebene liegen. Es können daher die abgesetzten Abschnitte vollflächig auf der Unterlage im Vereinzelner aufliegen, wogegen die in der Hauptebene liegenden Abschnitte des Umfangsrandes die obere Abgrenzung der Gesamtdicke des Umfangsrandes bilden.

Nach einer Ausführungsvariante ist es aber auch denkbar, dass die gegenüber den in der Hauptebene liegenden Abschnitten des Umfangsrandes abgesetzten Abschnitte in Längsrichtung des Umfangsrandes gesehen bogenförmig verlaufen. Es ist dadurch eine punkt- bzw. linienförmige Auflage der Unterlegscheibe auf der festen Unterlage gegeben, wobei sich alle abgesetzten Abschnitte gleichmässig abstützen können.

Es ist weiters zweckmässig, dass einander parallel verlaufend gegenüberliegende Bereiche des Umfangsrandes in spiegelbildlicher Anordnung mit gleich abgesetzten Abschnitten ausgeführt sind. Dies ist besonders dann von besonderem Vorteil, wenn die Unterlegscheiben in mehreren Stellungen in gleicher Weise übereinander gestapelt werden können. So ist es bei z.B. in Draufsicht quadratischen Unterlegscheiben gleichgültig, wie die aufeinander gestapelten Unterlegscheiben aufeinander folgen.

Im Rahmen der Erfindung ist es vorteilhaft, wenn der Umfangsrand an wenigstens zwei einander gegenüberliegenden Bereichen der Unterlegscheibe wenigstens einen abgesetzten Abschnitt aufweist. Es ist dadurch nicht nur eine ordnungsgemässe Abstützung der jeweils untersten Unterlegscheibe gewährleistet, sondern es kann dadurch auch ein relativ einfaches Werkzeug geschaffen werden.

Sowohl in bezug auf eine einfache Fertigung als auch zur Verwirklichung einer störungsfreien Vereinzelung ist die besondere Ausbildung der Uebergänge zwischen den zueinander abgesetzten Abschnitten besonders vorteilhaft. Es ist daher zweckmässig, wenn die Uebergänge recht- oder spitzwinklig zur Längsrichtung des Umfangsrandes verlaufend ausgebildet sind. Dabei können die beiden Uebergänge zwischen einem abgesetzten Abschnitt und den beiden daran anschliessenden, in der Hauptebene des Umfangsrandes liegenden Abschnitten parallel zueinander verlaufen oder einen spitzen Winkel miteinander einschliessen.

Bei einer mehreckigen Ausbildung der Unterlegscheibe mit vorzugsweise abgerundeten Eckbereichen ist am Umfangsrand jeder Seitenbegrenzung mittig bezogen auf die Seitenlänge jeweils ein abgesetzter Abschnitt vorgesehen. Es wird dadurch wiederum die einfache Stapelungsmöglichkeit der Unterlegscheiben für die Magazinierung ermöglicht, da die Uebereinanderstapelung der Unterlegscheiben nicht von einer bestimmten Ausrichtung abhängig ist, natürlich mit Ausnahme der jeweils übereinstimmenden Seitenbegrenzungen.

Die Länge der abgesetzten Abschnitte an den Seitenbegrenzungen der Unterlegscheibe entspricht annähernd der halben Seitenlänge. Eine solche Ausbildung ist insbesondere bei quadratischen oder bei fünf- oder mehreckigen Unterlegscheiben zweckmässig. Die abgesetzten Abschnitte des Umfangsrandes schliessen dabei unmittelbar an abgerundete Eckbereiche an. Es können daher die abgerundeten Eckbereiche in der Hauptebene des Umfangsrandes liegen, wogegen die abgesetzten Abschnitte praktisch die geraden Seitenbegrenzungen der Unterlegscheibe bilden. Es genügt also auf jeden Fall, auf jeder Seitenbegrenzung einen abgesetzten Abschnitt vorzusehen, damit die erfindungsgemässe Wirkung erzielt werden kann. Natürlich ist es denkbar, weitere abgesetzte Abschnitte vorzusehen, doch verteuert dies die Werkzeuge, und auch die Vereinzelung wird dann bei den satt aufeinander liegenden Unterlegscheiben problematischer.

Erfindungsgemäss wird weiters vorgeschlagen, dass der Umfangsrand der Unterlegscheibe flanschartig an einen konvex gewölbten Mittelteil mit einer mittigen Durchgangsöffnung für den Befestiger anschliesst, wobei vorzugsweise der vom Umfangsrand gebildete Flansch an den geraden, mit abgesetzten Abschnitten versehenen Seitenbegrenzungen der Unterlegscheibe wesentlich schmaler ausgeführt ist als an den abgerundeten Eckbereichen. Es wird dadurch gerade an dem am weitesten ausladenden Bereich der Unterlegscheibe eine zusätzliche Verstärkung erreicht.

Die Gesamtdicke des Umfangsrandes der Unterlegscheibe einschliesslich der abgesetzten Abschnitte entspricht annähernd der doppelten Wandstärke der Unterlegscheibe. Es ist also in einfacher Weise möglich, die Unterlegscheibe aus einem Material zu fertigen, welches nur noch die halbe Wandstärke gegenüber den üblichen Unterlegscheiben aufweist und trotzdem in einfacher Weise aus einem Magazin vereinzelt werden kann.

Demnach sind auch die abgesetzten Abschnitte des Umfangsrandes gegenüber den in der Hauptebene liegenden Abschnitten des Umfangsrandes um ein annähernd der Wandstärke der Unterlegscheibe entsprechendes Mass versetzt. Es ist auch ohne weiteres möglich, eine solche Verformung einer Unterlegscheibe durchzuführen, da ja die Ausbuchtungen am Umfangsrand der Unterlegscheibe lediglich auf die Höhe der Materialstärke begrenzt sind.

Die einwandfreie Funktion einer Vereinzelung bei einem magazinierten Stapel von Unterlegscheiben ist dann gewährleistet, wenn die Uebergänge zwischen den zueinander abgesetzten Abschnitten des Umfangsrandes wenigstens annähernd an den hauptangriffsflächen eines zur Vereinzelung eines Stapels von Unterlegscheiben ausgebildeten Vereinzelners bzw. eines zugeordneten Gegenhalters ausgebildet sind. Es ist also keine Möglichkeit gegeben, dass die unterste Unterlegscheibe in einem Stapel angehoben wird, oder dass sich irgendeine Störung beim Vereinzeln ergeben könnte.

Es ist also immer eine über die ganze Gesamthöhe des Umfangsrandes wirksame Angriffsfläche für den Vereinzelner gegeben.

Weitere Merkmale und besondere Vorteile werden in der nachstehenden Beschreibung anhand der Zeichnung noch näher erläutert. Es zeigen:
- Fig. 1 und 2: ein Ausführungsbeispiel einer grossflächigen Unterlegscheibe, wobei Fig. 2 eine Draufsicht auf die Unterlegscheibe darstellt und Fig. 1 einen Schnitt nach der Linie I-I in Fig. 2;
- Fig. 3: einen Schnitt nach der Linie II-II in Fig. 2;
- Fig. 4: einen Schnitt nach der Linie III-III in Fig. 2;
- Fig. 5: den Teilabschnitt A nach Fig. 4 vergrössert dargestellt;
- Fig. 6: einen Schnitt nach der Linie IV-IV in Fig. 2;
- Fig. 7: mehrere in einem Magazin übereinander gestapelte Unterlegscheiben mit einem schematisch angedeuteten Schieber einer Vereinzelungsvorrichtung.

Die grossflächige Unterlegscheibe 1 weist eine Durchgangsöffnung 2 zur Aufnahme eines Befestigers auf. Der die Umfangsbegrenzung 3 bildende Umfangsrand 4 der Unterlegscheibe 1 ist in dessen Längsrichtung gesehen ein- oder mehrfach stufen- oder bogenförmig abgesetzt ausgebildet. Es werden dadurch zueinander abgesetzte Abschnitte 5 und 6 gebildet. Einzelne Abschnitte 6 des Umfangsrandes 4 liegen also gegenüber der Hauptebene H des Umfangsrandes 4 in einer mit Abstand parallel dazu verlaufenden Ebene E.

Es ist im Rahmen der Erfindung aber auch möglich, dass die gegenüber den in der Hauptebene H liegenden Abschnitten 5 des Umfangsrandes 4 abgesetzten Abschnitte 6 in Längsrichtung des Umfangsrandes 4 gesehen bogenförmig verlaufen.

An den einander parallel verlaufend gegenüberliegenden Seitenbereichen sind in spiegelbildlicher Anordnung gleich abgesetzte Abschnitte 6 ausgeführt.

Die Uebergänge 7 zwischen den zueinander abgesetzten Abschnitten 5 und 6 des Umfangsrandes 4 sind bogenförmig verlaufend oder scharfkantig ausgebildet.

Zur einwandfreien Funktion ist vorgesehen, dass an wenigstens zwei einander gegenüberliegenden Seitenbegrenzungen der Unterlegscheibe 1 der Umfangsrand 4 wenigstens jeweils einen abgesetzten Abschnitt 6 aufweist.

Die Uebergänge 7 sind recht- oder spitzwinklig zur Längsrichtung des Umfangsrandes 4 verlaufend ausgebildet. Beim gezeigten Ausfünrungsbeispiel schliessen die beiden Uebergänge 7 zwischen einem abgesetzten Abschnitt 6 und den beiden daran anschliessenden, in der Hauptebene H des Umfangsrandes 4 liegenden Abschnitten einen spitzen Winkel zueinander ein. Es wäre aber auch denkbar, dass die beiden Uebergänge 7 parallel zueinander ausgerichtet sind.

Bei einer mehreckigen Ausbildung der Unterlegscheibe 1, wie dies beim Ausführungsbeispiel gezeigt ist, weist die Unterlegscheibe vorzugsweise abgerundete Eckbereiche auf, wobei am Umfangsrand 4 jeder Seitenbegrenzung mittig bezogen auf die Seitenlänge jeweils ein abgesetzter Abschnitt 6 vorgesehen ist. Die Länge der abgesetzten Abschnitte 6 an den Seitenbegrenzungen der Unterlegscheibe 1 entspricht annähernd der halben Seitenlänge. Die abgesetzten Abschnitte 6 des Umfangsrandes 4 schliessen dabei unmittelbar an die abgerundeten Eckbereiche an, also an die in der Hauptebene H liegenden Abschnitte 5.

Der Umfangsrand 4 der Unterlegscheibe 1 schliesst flanschartig an einen konvex gewölbten Mittelteil 8 an, wobei der vom Umfangsrand 4 gebildete Flansch an den geraden, mit abgesetzten Abschnitten 6 versehenen Seitenbegrenzungen der Unterlegscheibe 1 wesentlich schmaler ausgeführt ist als an den abgerundeten Eck- oder Uebergangsbereichen. Es wird dadurch gerade an den von der mittigen Durchgangsöffnung 2 am entferntesten liegenden Bereichen eine zusätzliche Versteifung der Unterlegscheibe erzielt.

Die Gesamtdicke D des Umfangsrandes 4 der Unterlegscheibe 1 entspricht einschliesslich der abgesetzten Abschnitte 5, 6 annähernd der doppelten Wandstärke S der Unterlegscheibe 1. Die abgesetzten Abschnitte 6 des Umfangsrandes 4 sind daher gegenüber den in der Hauptebene H liegenden Abschnitten 5 des Umfangsrandes 4 um ein annähernd der Wandstärke S der Unterlegscheibe 1 entsprechendes Mass versetzt.

Es kann daher beispielsweise bei einer Unterlegscheibe, bei welcher bisher aus Gründen der sicheren Vereinzelung aus einem Stapel eine Wandstärke von 1 mm gewählt worden ist, nunmehr für die Unterlegscheibe eine Wandstärke von 0,5 mm gewählt werden. Die erfindungsgemässen Massnahmen sind aber nicht nur auf diese Wandstärkenbereiche eingeschränkt. Es ist also auch durchaus möglich, Unterlegscheiben, welche bisher eine relativ grosse Dicke aufwiesen, nunmehr auf die erfindungsgemässe Art und Weise auszubilden, um dann diese dünneren Unterlegscheiben in der für die dicken Unterlegscheiben ausgebildeten Verschraubeinrichtungen verarbeiten zu können.

Besonders wichtig ist es, und dies hat sich auch bei Versuchen gezeigt, dass die Uebergänge 7 zwischen den zueinander abgesetzten Abschnitten 5 und 6 des Umfangsrandes 4 wenigstens annähernd an den Hauptangriffsflächen eines zur Vereinzelung eines Stapels von Unterlegscheiben 1 ausgebildeten Vereinzelners bzw. eines zugeordneten Gegenhalters ausgebildet sind. Je nach Art des Vereinzelners, ob dies nun durch eine Verschiebe- oder eine Verschwenkbewegung erfolgt, können also die Uebergänge und die zueinander abgesetzten Abschnitte 5 und 6 an besonders dafür vorgesehenen Bereichen im Bereich der Umfangsbegrenzung 3 der Unterlegscheibe 1 vorgesehen werden.

Je nach der Grundform der Unterlegscheibe können auch die Längen der aufeinander folgenden Abschnitte 5 und 6 unterschiedlich sein, und es können auch an jeder Seitenbegrenzung oder beispielsweise am Umfangsrand einer in Draufsicht kreis- oder ellipsenförmigen Unterlegscheibe mehrere aufeinander folgende zueinander abgesetzte Abschnitte 5 und 6 vorgesehen werden.

Die erfindungsgemässen Massnahmen können natürlich auch bei verschiedensten Umfangsformen der Unterlegscheiben eingesetzt werden, ob diese nun in Draufsicht kreis- oder ellipsenförmig, drei- oder mehreckig oder streifenförmig mit abgerundeten Eckbereichen ausgeführt sind.

Es sind in der Regel, um ein sicheres Abstützen der Unterlegscheibe auf einen entsprechenden Unterlage zu gewährleisten, wenigstens 3 abgesetzte Abschnitte 6 am Umfangsrand der Unterlegscheibe notwendig. Je nach Einsatzzweck oder -erfordernis können eine entsprechende Anzahl solcher abgesetzter Abschnitte vorgesehen werden. Bei länglichen Unterlegscheiben ist es aber auch denkbar, lediglich an zwei einander gegenüberliegenden Seitenbegrenzungen abgesetzte Abschnitte vorzusehen, welche durch entsprechende Länge eine exakte Abstützung gewährleisten.

Im Rahmen der Erfindung ist es auch denkbar, die Abschnitte 6 mehrfach, also in mehreren Stufen abzusetzen, wobei dadurch auch grössere Absetztiefen möglich sind, so dass die Versetzung also nicht nur annähernd der Materialstärke entspricht, sondern wesentlich darüber liegt.

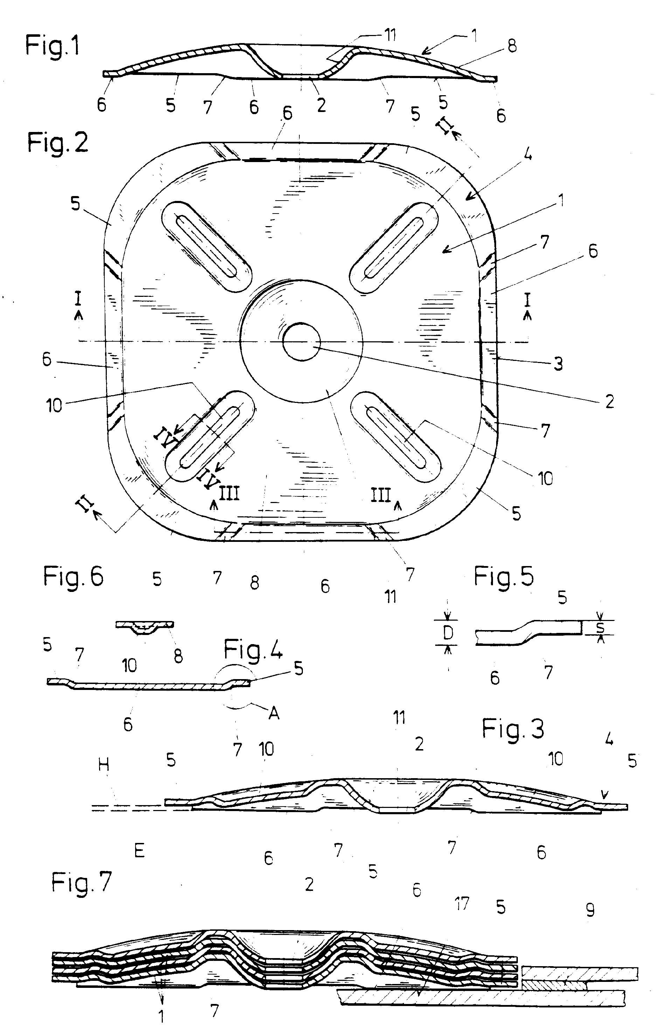

In Fig. 7 ist schematisch dargestellt, wie mehrere Unterlegscheiben 1 in einem Stapel übereinander angeordnet sind. Die abgesetzten Abschnitte 6 liegen dabei auf einer festen Unterlage 17 eines Vereinzelners auf, wobei ein verschwenk- oder geradlinig verschiebbarer Schieber 9 jeweils die unten liegende Unterlegscheibe 1 unternalb des Stapels wegstossen kann. Durch die besondere Randausbildung der Unterlegscheibe ist gewährleistet, dass jeweils nur die unterste Unterlegscheibe 1 erfasst wird, wobei der restliche Stapel von Unterlegscheiben beim Ausschieben der untersten Unterlegscheibe 1 in üblicher Weise entsprechend angehoben wird.

Als ergänzende Massnahme und zur konstruktiven und festigkeitsmässigen Verbesserung von Unterlegscheiben ist es zweckmässig, wenn bei einem konvex gewölbten Mittelteil 8 strahlenförmig gegen die Eckbereiche gerichtete, in den gewölbten Bereich 8 hineinragende Versteifungssicken 10 vorgesehen sind. Diese Versteifungssicken 10 sind dabei kürzer ausgeführt als der Abstand zwischen der die Durchgangsöffnung 2 begrenzenden Vertiefung 11 und dem flanschartigen Umfangsrand 4. Die die Durchgangsöffnung 2 begrenzende Vertiefung 11 in der Unterlegscheibe 1 weist eine kugelabschnittartige Oberfläche auf.

Durch die erfindungsgemässen Massnahmen wird eine wesentliche Verbesserung sowohl in konstruktiver als auch in materialeinsatzmässiger Hinsicht bei grossflächigen Unterlegscheiben erzielt. Trotz geringerem Materialverbrauch für die Unterlegscheiben ist eine ausreichende Festigkeit derselben und eine störungsfreie Vereinzelung der Unterlegscheiben aus einem Stapel möglich.

## Patentansprüche

1. Grossflächige stapelbare Unterlegscheibe mit einer Durchgangsöffnung zur Aufnahme eines Befestigers in einem Konvex gewölbten Mittelbereich, an den sich ein äusserer Umfangsrand flanschartig anschließt und mit abgesetzten Bereichen zum Erleichtern des Vereinzelns aus einem Stapel, dadurch gekennzeichnet, dass der äussere Umfangsrand (4) der Unterlegscheibe (1) in dessen Längsrichtung gesehen in mehreren Abschnitten (5, 6) ein- oder mehrfach stufen- oder bogenförmig abgesetzt ausgebildet ist, und dass die Uebergänge (7) zwischen den zueinander abgesetzten Abschnitten (5, 6) des Umfangsrandes (4) bogenförmig oder scharfkantig ausgebildet sind.

2. Unterlegscheibe nach Anspruch 1, dadurch gekennzeichnet, dass einzelne Abschnitte (6) des Umfangsrandes (4) in Längsrichtung desselben gesehen gegenüber einer Hauptebene (H) des Umfangsrandes (4) in einer mit Abstand parallel dazu verlaufenden Ebene (E) liegen.

3. Unterlegscheibe nach Anspruch 2, dadurch gekennzeichnet, dass die gegenüber den in der Hauptebene (H) liegenden Abschnitten (5) des Umfangsrandes (4) abgesetzten Abschnitte (6) in Längsrichtung des Umfangsrandes (4) gesehen bogenförmig verlaufen.

4. Unterlegscheibe nach den Ansprüchen 1, 2 oder 3, dadurch gekennzeichnet, dass einander parallel verlaufend gegenüberliegende Bereiche des Umfangsrandes (4) in spiegelbildlicher Anordnung mit gleich abgesetzten Abschnitten (5, 6) ausgeführt sind.

5. Unterlegscheibe nach Anspruch 1, dadurch gekennzeichnet, dass an wenigstens zwei einander gegenüberliegenden Bereichen der Unterlegscheibe (1) der Umfangsrand (4) wenigstens einen abgesetzten Abschnitt (6) aufweist.

6. Unterlegscheibe nach den Ansprüchen 1 oder 5, dadurch gekennzeichnet, dass die Uebergänge (7) recht- oder spitzwinklig zur Längsrichtung des Umfangsrandes (4) verlaufend ausgebildet sind.

7. Unterlegscheibe nach Anspruch 6, dadurch gekennzeichnet, dass die beiden Uebergänge (7) zwischen einem abgesetzten Abschnitt (6) und den beiden daran anschliessenden, in der Hauptebene (H) des Umfangsrandes (4) liegenden Abschnitten (5) parallel zueinander verlaufen oder einen spitzen Winkel miteinander einschliessen.

8. Unterlegscheibe nach Anspruch 1 oder einem der Ansprüche 2 bis 7, dadurch gekennzeichnet, dass bei einer mehreckigen Ausbildung der Unterlegscheibe (1) mit vorzugsweise abgerundeten Eckbereichen am Umfangsrand (4) jeder Seitenbegrenzung mittig bezogen auf die Seitenlänge jeweils ein abgesetzter Abschnitt (6) vorgesehen ist.

9. Unterlegscheibe nach Anspruch 8, dadurch gekennzeichnet, dass die Länge der abgesetzten Abschnitte (6) an den Seitenbegrenzungen der Unterlegscheibe (1) annähernd der halben Seitenlänge entspricht.

10. Unterlegscheibe nach den Ansprüchen 5 oder 8 und 9, dadurch gekennzeichnet, dass die abgesetzten Abschnitte (6) des Umfangsrandes (4) unmittelbar an abgerundete Eckbereiche anschliessen.

11. Unterlegscheibe nach Anspruch 1 oder einem der Ansprüche 2 bis 10, dadurch gekennzeichnet, dass der vom Umfangsrand (4) gebildete Flansch an den geraden, mit abgesetzten Abschnitten (6) versehenen Seitenbegrenzungen der Unterlegscheibe (1) wesentlich schmaler ausgeführt ist als an den abgerundeten Eckbereichen.

12. Unterlegscheibe nach Anspruch 1 oder einem der Ansprüche 2 bis 11, dadurch gekennzeichnet, dass die Gesamtdicke (D) des Umfangsrandes (4) der Unterlegscheibe (1) einschliesslich der abgesetzten Abschnitte (6) annähernd der doppelten Wandstärke (S) der Unterlegscheibe (1) entspricht.

13. Unterlegscheibe nach Anspruch 12, dadurch gekennzeichnet, dass die abgesetzten Abschnitte (6) des Umfangsrandes (4) gegenüber den in der Hauptebene (H) liegenden Abschnitten (5) des Umfangsrandes (4) um ein annähernd der Wandstärke (S) der Unterlegscheibe (1) entsprechendes Mass versetzt sind.

## Claims

1. A large-area stackable washer with an opening to receive a fastener in a convexly curved central zone which is adjoined by an outer peripheral rim, and with stepped zones for facilitating the separation from a stack, characterised in that, viewed in its longitudinal direction, the outer peripheral rim (4) of the washer (1) in a plurality of portions (5, 6) is formed stepped in one or more steps or in a curve, and in that the transitional regions (7) between the mutually stepped portions (5, 6) of the peripheral rim (4) are of curved or sharp-edged form.

2. A washer according to Claim 1, characterised in that, viewed in their longitudinal direction, individual portions (6) of the peripheral rim (4) are situated with respect to a principal plane (H) of the peripheral rim (4) in a plane (E) extending parallel thereto and at a distance therefrom.

3. A washer according to Claim 2, characterised in that the portions (6) stepped with respect to the portions (5) of the peripheral rim (4) lying in the principal plane (H) extend arcuately, viewed in the longitudinal direction of the peripheral rim (4).

4. A washer according to Claims 1, 2 or 3, characterised in that the opposite zones of the peripheral rim (4) extending parallel to one another are formed in a mirror-image arrangement with equally stepped portions (5, 6).

5. A washer according to Claim 1, characterised in that in at least two mutually opposed zones of the washer (1) the peripheral rim (4) has at least one stepped portion (6).

6. A washer according to Claim 1 or 5, characterised in that the transitional regions (7) are designed to extend at a right angle or at an acute angle to the longitudinal direction of the peripheral rim (4).

7. A washer according to Claim 6, characterised in that between a stepped portion (6) and the two adjoining portions (5) lying in the principal plane (H) of the peripheral rim (4) the two transitional regions (7) extend parallel to one another or form an acute angle with one another.

8. A washer according to Claim 1 or any one of Claims 2 to 7, characterised in that when the washer (1) is of polygonal shape, with preferably rounded corners zones at the peripheral rim (4) of each lateral boundary, a respective stepped portion (6) is provided centrally in relation to the side length.

9. A washer according to Claim 8, characterised in that the length of the stepped portions (6) at the lateral boundaries of the washer (1) corresponds approximately to half the side length.

10. A washer according to Claims 5 or 8 and 9, characterised in that the stepped portions (6) of the peripheral rim (4) directly adjoin rounded corner zones.

11. A washer according to Claim 1 or any one of Claims 2 to 10, characterised in that at the straight lateral boundaries of the washer (1) provided with stepped portions (6) the flange formed by the peripheral rim (4) is designed to be substantially narrower than at the rounded corner zones.

12. A washer according to Claim 1 or any one of Claims 2 to 11, characterised in that the total thickness (D) of the peripheral rim (4) of the washer (1), including the stepped portions (6), corresponds approximately to double the wall thickness (S) of the washer (1).

13. A washer according to Claim 12, characterised in that the stepped portions (6) of the peripheral rim (4) are offset by an amount corresponding approximately to the wall thickness (S) of the washer (1) with respect to the portions (5) of the peripheral rim (4) lying in the principal plane (H).

## Revendications

1. Rondelle à grande surface pouvant être empliée avec une ouverture de passage servant à recevoir une fixation dans une zone médiane galbée convexe, à laquelle se raccorde un bord extérieur périphérique en forme de collerette et avec des zones décalées pour faciliter l'individualisation des rondelles à partir d'un empilement, rondelle caractérisée en ce que le bord extérieur périphérique (4) de la rondelle (1) vu dans le sens de sa longueur est constitué en plusieurs sections (5, 6) décalées, uniformes ou à gradins multiples ou en forme d'arc et en ce que les passages (7) entre les sections décalées l'une par rapport à l'autre (5, 6) du bord périphérique (4) sont constituées en forme d'arc ou à arête vive.

2. Rondelle selon la revendication 1, caractérisée en ce que différentes sections (6) du bord périphérique (4) vu dans le sens de sa longueur se trouvent par rapport à un plan principal (H) du bord périphérique (4) dans un plan (E) qui s'étend parallèlement à cela à une certaine distance.

3. Rondelle selon la revendication 2, caractérisée en ce que les sections (6) décalées par rapport aux sections (5), qui se trouvent dans le plan principal (H), du bord périphérique (4), vues dans le sens longitudinal du bord périphérique (4), s'étendent en forme d'arc.

4. Rondelle selon les revendications 1, 2 ou 3, caractérisée en ce que des zones du bord périphérique (4) qui s'étendent parallèlement les unes aux autres en se faisant vis-à-vis sont disposées de façon symétrique avec des sections (5, 6) décalées de la même façon.

5. Rondelle selon la revendication 1, caractérisée en ce que sur au moins deux zones situées en regard l'une de l'autre de la rondelle (1) le bord périphérique (4) présente au moins une section décalée (6).

6. Rondelle selon les revendications 1 ou 5, caractérisée en ce que les passages (7) sont constitués de façon à s'étendre à angle droit ou sous un angle aigu par rapport au sens longitudinal des bords périphérique (4).

7. Rondelle selon la revendication 6, caractérisée en ce que les deux passages (7) entre une section décalée (6) et les deux sections (5) qui s'y raccordent, et se trouvent dans le plan principal (H) du bord périphérique (4), s'étendent parallèlement les uns aux autres ou forment un angle aigu les uns par rapport aux autres.

8. Rondelle selon la revendication 1 ou l'une des revendications 2 à 7, caractérisée en ce que l'on prévoit une section décalée (6) dans le cas d'une réalisation polygonale de la rondelle (1) avec de préférence des zones d'angle arrondies sur le bord périphérique (4) au milieu de chaque délimitation latérale par rapport à la longueur latérale.

9. Rondelle selon la revendication 8, caractérisée en ce que la longueur des sections décalées (6) sur les délimitations latérales de la rondelle (1) correspond à peu près à la moitié de la longueur latérale.

10. Rondelle selon les revendications 5 ou 8 et 9, caractérisée en ce que les sections décalées (6) du bord périphérique (4) se raccordent directement aux zones angulaires arrondies.

11. Rondelle selon la revendication 1, ou l'une des revendications 2 à 10, caractérisée en ce que la collerette formée par le bord périphérique (4) est réalisée de façon sensiblement plus étroite sur les délimitations latérales rectilignes pourvues des sections décalées (6) que sur les zones angulaires arrondies.

12. Rondelle selon la revendication 1 ou l'une des revendications 2 à 11, caractérisée en ce que l'épaisseur totale (D) du bord périphérique (4) de la rondelle (1) y compris des sections décalées (6) correspond à peu près au double de l'épaisseur de paroi (S) de la rondelle (1).

13. Rondelle selon la revendication 12, caractérisée en ce que les sections décalées (6) du bord périphérique (4) sont décalées par rapport aux sections (5) du bord périphérique (4) qui se trouvent dans le plan principal (H) d'une mesure qui correspond à peu près à l'épaisseur de paroi (S) de la rondelle (1).
